# EUROPÄISCHE PATENTSCHRIFT

(11) **EP 1 841 987 B1**
(45) Veröffentlichungstag und Bekanntmachung des Hinweises auf die Patenterteilung: **20.08.2008**
(21) Anmeldenummer: 05850168.5
(22) Anmeldetag: 17.12.2005
(51) Int. Cl.: F16H 15/36

(54) **VARIATOR FÜR EIN STUFENLOSES GETRIEBE**
VARIATOR FOR A CONTINUOUSLY-VARIABLE GEARBOX
VARIATEUR POUR UNE TRANSMISSION A VARIATION CONTINUE

(30) Priorität: 15.01.2005 DE 102005001975; 14.06.2005 DE 102005027303
(43) Veröffentlichungstag der Anmeldung: 10.10.2007
(73) Patentinhaber: LuK Lamellen und Kupplungsbau Beteiligungs KG, 77815 Bühl (DE)
(72) Erfinder: SOUCA, Nicolae, 76534 Baden-Baden (DE)
(86) Internationale Anmeldenummer: PCT/DE2005/002274
(87) Internationale Veröffentlichungsnummer: WO 2006/074628

(56) Entgegenhaltungen:
- DE-A1- 2 220 089
- DE-A1- 19 804 011
- US-A- 4 183 253

## Beschreibung

Die Erfindung betrifft eine Variatoreinheit für ein stufenloses Getriebe, insbesondere ein CVT-Getriebe entsprechend dem Oberbegriff des Anspruchs 1. Der Variator in einem solchen Getriebe dient dazu, das Drehmoment einer Eingangswelle auf eine Ausgangswelle zu übertragen, wobei das Übersetzungsverhältnis zwischen der Eingangswelle und der Ausgangswelle innerhalb eines Übersetzungsbereiches frei einstellbar ist.

Bei bekannten Variatoren für stufenlos einstellbare Getriebe werden Ketten oder metallische Bänder verwendet, welche beispielsweise mit kegelförmigen Übertragungsflächen an der Ein-und Ausgangswelle in Eingriff sind.

Außerdem ist es bekannt, Variatoren für CVT-Getriebe ohne Ketten oder metallische Bänder vorzusehen. Beispielsweise gibt es sogenannte "Half-Toroidal-CVT's", bei welchen die Bewegung zwischen zwei Toroidalflächen mittels einer verstellbaren Zwischenscheibe übertragen wird. Die Kraftübertragung benötigt dabei hohe Anpresskräfte, was wiederum zu großen zunehmenden Reaktionskräften in den Elementpaarungen des Variators führt. Daher werden bei solchen aus zwischen zwei Toroidalflächen das Drehmoment übertragenden Variatoren mehrere Zwischenscheiben zwischen den Toroidal-Scheiben montiert und/oder mehrere Variatoren parallel montiert, damit die hohen Anpresskräfte reduziert und / oder höhere Drehmomente übertragen werden können.

Die gattungsgemäße deutsche Offenlegungsschrift DE 198 04 011 A1 offenbart ein stufenlos verstellbares Wälzgetriebe mit zumindest einer Kegelscheibe, einer Gruppe drehbar gelagerter Planetenrollen, welche jeweils wenigstens eine kegelige Lauffläche aufweisen, mit zumindest einer Gruppe von doppelkegelförmigen, drehbar und längsverschieblich gelagerten Zwischenrollen, welche zwischen den Planetenrollen und der Kegelscheibe angeordnet sind, wobei die Kegelscheiben, die Planetenrollen und die Zwischenrollen rotationssymmetrisch bezüglich der Getriebelängsachse angeordnet sind. Dabei sind die einander zugewandten Laufflächen der Kegelscheibe und der Planetenrollen derart ausgebildet, dass die in Schnittebenen durch die Getriebelängsachse verlaufenden Falllinien dieser Laufflächen parallel zueinander orientiert sind, wobei die Drehachsen der Zwischenrollen gegenüber den Falllinien von jeweils zugeordneten kegeligen Laufflächen der Kegelscheibe und der Planetenrollen unter einem Winkel angeordnet sind, und wobei die Drehachsen aller Zwischenrollen jeder Zwischenrollengruppe gemeinsam bezüglich der Kegelscheibe und der Planetenrollen parallel zur Getriebelängsachse unter Änderung des Übersetzungsverhältnisses des Wälzgetriebes verschiebbar sind.

Als Alternative dazu ist ein sogenannter Kegelringvariator bekannt, welcher ebenfalls ohne Kette oder metallisches Band auskommt, sondern mit einem starren Übertragungsring arbeitet. Dabei wird das Drehmoment zwischen zwei zueinander entgegengesetzt konusförmigen Flächen, die mittels zueinander paralleler Achsen drehbar gelagert sind, mittels einer Ringscheibe übertragen. Die Spreizung der Übersetzung wird durch das Verhältnis zwischen kleinstem und größtem Durchmesser der Kegel limitiert.

Es ist Aufgabe der Erfindung, einen Variator für ein stufenlos verstellbares Getriebe, insbesondere ein CVT-Getriebe, vorzusehen, welcher eine hohe Spreizung der Übersetzung erlaubt und leise arbeitet. Gleichzeitig soll der Variator kostengünstig herstellbar sein.

Diese Aufgabe wird mit einem Variator mit den Merkmalen des Anspruchs 1 gelöst. Bevorzugte Ausführungsformen und Weiterbildungen sind in den abhängigen Ansprüchen angegeben.

Der Erfindung liegt der Gedanke zugrunde, die sehr aufwendige Gestaltung einer Kette für Variatoren zu vermeiden, die auf Grund vieler Kettenglieder eine komplexe und komplizierte Geometrie aufweist und im Betrieb u.a. durch die Bewegung der Kettenglieder relativ zueinander verhältnismäßig laut ist. Daher wird als Übertragungselement ein starres Ringelement verwendet, das einfach herzustellen ist. Daher werden Betriebsgeräusche, die durch die Kettenglieder und insbesondere deren Beweglichkeit zueinander entstehen, vermieden. Um gleichzeitig hohe Spreizungen im Variator vorsehen zu können, wird eine Paarung aus einer konvex und einer konkav gewölbten Übertragungsfläche gewählt, entlang derer ein Übertragungsring verschiebbar ist. Da die Anlagepunkte des Übertragungsrings an die Übertragungsflächen nicht auf einer geradlinigen Bahn, sondern einer gekrümmten Bahn liegen und somit die für das Übersetzungsverhältnis ausschlaggebende kinematischen Radien stärker als linear der Krümmung entsprechend variieren, werden Spreizungen der Übersetzung über einen weiten Bereich ermöglicht. Außerdem wird durch die Kombination aus konvexer und konkaver Übertragungsfläche erreicht, dass bereits eine Verstellung des Übertragungsrings um einen kurzen Weg zu einer deutlichen Veränderung des Übertragungsverhältnisses führt, da die Veränderung der kinematischen Radien des Variators nicht linear verläuft.

Somit sieht der Variator für ein stufenloses Getriebe ein um eine erste Drehachse drehbares erstes Übertragungselement mit einer konvex gekrümmten, um die erste Drehachse rotationssymmetrischen Übertragungsfläche, ein zweites um eine zweite Drehachse drehbares Übertragungselement mit einer konkav gekrümmten, um die zweite Drehachse rotationssymmetrischen Übertragungsfläche und einen starren Übertragungsring vor, der in seiner Relativposition zu den Übertragungsflächen innerhalb eines Verstellbereiches verstellbar und an beide Übertragungsflächen anpressbar ist und ein Drehmoment zwischen der ersten und der zweiten Übertragungsfläche überträgt. Die Schnittlinien der Übertragungsflächen mit einer durch die Drehachsen aufgespannten Ebene sind zumindest im Verstellbereich des Übertragungsrings parallel. Dabei ist mindestens das erste oder das zweite Übertragungselement in Axialrichtung seiner Drehachse verschiebbar. Dadurch kann eine gute Anpressung des Übertragungsrings an die Übertragungsflächen sichergestellt werden.

Vorzugsweise ist die konvex gekrümmte Übertragungsfläche eine sphärische Fläche und die konkav gekrümmte Übertragungsfläche eine Toroidalfläche. Diese Anordnung erlaubt besonders große Spreizungen, so dass das Übersetzungsverhältnis empfindlich auf eine Bewegung des Übertragungsrings anspricht.

Dabei wird es bevorzugt, dass die sphärische Fläche und der Generierkreis der Toroidalfläche gleiche Mittelpunkte aufweisen und der Radius r2 der Toroidalfläche die Summe aus dem Radius r1 der sphärischen Fläche und d ist, wobei d der kleinste Abstand zwischen der Toroidalfläche und der sphärischen Fläche ist. Dieser kleinste Abstand d liegt ebenfalls in der Schnittebene, die durch die beiden Drehachsen des ersten Übertragungselements bzw. des zweiten Übertragungselements aufgespannt wird. Der Übertragungsring hat dann die Breite d.

Vorzugsweise liegt außerdem der Mittelpunkt des Übertragungsrings, der vorzugsweise ein Kreisring ist, auf der Verlängerung der Radien der sphärischen Fläche und des Generierkreises der Toroidalfläche. Damit kann eine gute Anpressung und leichte Verstellung des Rings durch Kippen des Rings aus der Position, in der er senkrecht zur Tangente an den Berührungspunkten zu den Übertragungsflächen liegt, gewährleistet werden.

Nach einer bevorzugten Ausführungsform umfasst die Anordnung weiter eine Verstelleinrichtung zur Verstellung des Übertragungsrings, die den Übertragungsring bei einem Vorstellvorgang zunächst aus seiner zu den Übertragungsflächen senkrechten Position auslenkt. Durch die Neigung des Rings bezüglich der Übertragungsflächen kann sich der Ring frei positionieren in Abhängigkeit von der Bewegungsrichtung eines Gaspedals. Das zur Verstellung erforderliche Moment wird von einem Motor, beispielsweise einem Elektromotor von außen geliefert.

Vorzugsweise ist die konvexe Übertragungsfläche, insbesondere eine sphärische Fläche, am Eingangsübertragungselement und die konkave Übertragungsfläche, insbesondere die Toroidalfläche, am Ausgangsübertragungselement vorgesehen.

Vorzugsweise verlaufen die Drehachsen des ersten und des zweiten Übertragungselements parallel zueinander. Dadurch kann eine gute Anpressung zwischen den Übertragungsflächen und eine zuverlässige Momentenübertragung gewährleistet werden.

Nach einer bevorzugten Ausführungsform wird eine Variatoranordnung vorgesehen, die mehrere Variatoren mit den genannten Merkmalen enthält.

Insbesondere werden bevorzugter Weise zwei achsensymmetrisch zueinander angeordnete Variatoren vorgesehen, wobei die Symmetrieachse der Anordnung senkrecht zu den zueinander parallelen Drehachsen der Übertragungselemente ist. Alternativ werden vorzugsweise vier Variatoren vorgesehen, wobei die Variatoren achsensymmetrisch bezüglich einer auf den parallelen Drehachsen der Übertragungselemente senkrecht stehenden Symmetrieachse und achsensymmetrisch bezüglich der gemeinsamen Drehachse der Übertragungselemente mit den konkaven Übertragungsflächen angeordnet sind.

Nachfolgend wird die Erfindung am Beispiel der beigefügten Figuren beschrieben, wobei
Fig. 1 einen Schnitt durch einen Variator in der Ebene, welche durch die Drehachsen des Eingangsübertragungselements und des Ausgangsübertragungselements aufgespannt wird, zeigt;
Fig. 2 einen Verstellmechanismus für den Variator aus Fig. 1 zeigt;
Fig. 3 eine Anordnung aus zwei Variatoren zeigt; und
Fig. 4 eine Anordnung aus vier Variatoren zeigt.

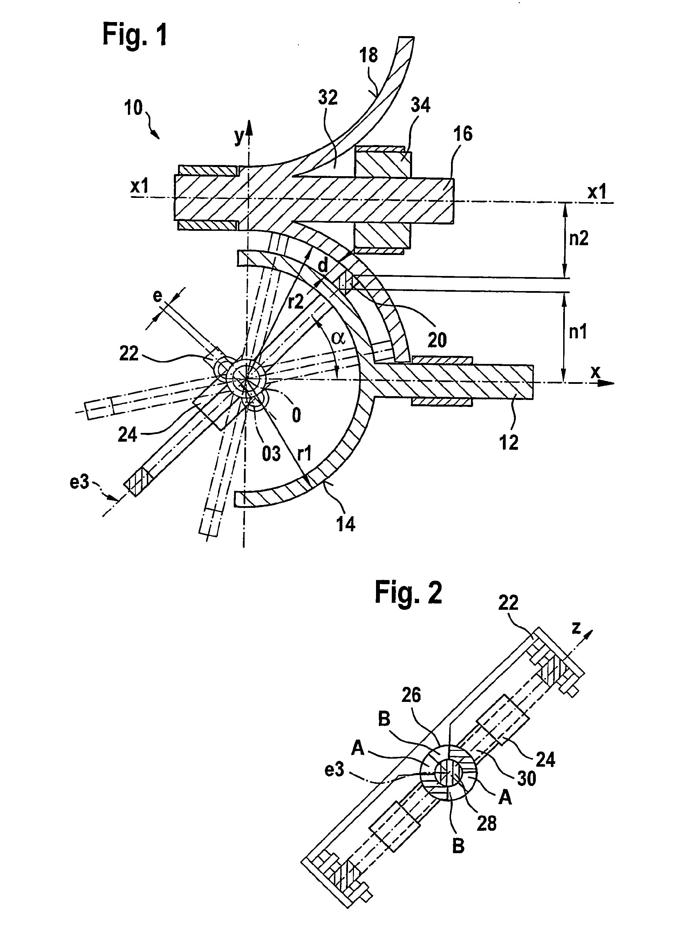

In Fig. 1 ist eine Querschnittsansicht durch einen Variator gemäß einer Ausführungsform der Erfindung dargestellt. Die Querschnittsebene ist diejenige Ebene, in der die das Moment zwischen Eingangs- und Ausgangswelle übertragenden Elemente aneinander anliegen. Der Variator 10 enthält eine erste Welle 12, die in einem (nicht dargestellten) Gehäuse drehbar um die Drehachse x gelagert ist. An einem Ende der Welle 12 ist eine erste Übertragungsfläche 14 vorgesehen, die drehfest mit der Welle 12 verbunden ist bzw. integral mit ihr gefertigt ist.

Die erste Übertragungsfläche wird durch die Außenfläche eines Abschnittes einer Kugel, näherungsweise eine Halbkugel, gebildet, die sich an die Drehwelle 12 anschließt, so dass die Rotationssymmetrieachse der sphärischen Fläche mit der Drehachse x zusammenfällt. Außerdem ist die sphärisch gekrümmte Übertragungsfläche 14 derart mit der Welle 12 verbunden, dass sie in Richtung auf die Welle 12 hin konvex ist. Die sphärische Fläche weist einen Radius r1 auf. Vorzugsweise ist die erste Übertragungsfläche zumindest als der einer Halbkugel entsprechende Teil einer Kugel gestaltet, damit die Variation des Radius eines entlang der Halbkugel laufenden, gedachten Rings mit Mittelpunkt auf der x-Achse und senkrecht zur x-Achse zur Variation des Übersetzungsverhältnisses ausgenutzt werden kann. Der Radius n1 dieses Rings, der dem ersten kinematischen Radius des Variators entspricht, variiert somit im Bereich 0 < n1 ≤ r1.

Bei einer Drehung der Welle 12 um die Achse x dreht sich die im wesentlichen halbkugelförmige erste Übertragungsfläche 14 mit und rotiert ebenfalls um die Achse x. Die konvex gekrümmte kugelförmige Übertragungsfläche 14 bildet zusammen mit der Welle 12 ein Eingangsübertragungselement, das mit der Drehzahl des Motors (nicht dargestellt) von beispielsweise einem Kraftfahrzeug rotiert.

Der Variator 10 enthält ferner eine zweite Welle 16, deren Achse x1 parallel zur Achse x der ersten Welle 12 angeordnet ist. Die Welle 16 ist ebenfalls zur Drehung in dem (nicht dargestellten) Gehäuse gelagert. Mit der zweiten Welle 16 drehfest verbunden oder integral mit ihr gefertigt ist eine zweite Übertragungsfläche 18.

Die zweite Übertragungsfläche 18 ist als Teil einer Torusfläche geformt, wobei der Generierkreis des Torus den selben Mittelpunkt O wie die halbkugelförmige erste Übertragungsfläche 14, einen Radius r2, der um einen Abstand d größer als der Radius r1 der halbkugelförmigen Übertragungsfläche 14 ist, und als Erzeugungsachse die Achse x1, d.h. die Drehachse des zweiten Übertragungselements, aufweist. Dabei wird die Übertragungsfläche 18 des zweiten Übertragungselements durch den Teil einer Torusfläche erzeugt, der einer Drehung von näherungsweise einem Viertelkreis mit dem erwähnten Radius und dem erwähnten Mittelpunkt um die Achse x1 entspricht, wobei sich der Viertelkreis ausgehend von einem Punkt, an dem die Tangente des Viertelkreises parallel zur Achse x1 und am nächsten an diese gelegen ist, um 90° bis zu einem Endpunkt in der Nähe der ersten Welle erstreckt und zwar derart, dass der generierende Viertelkreis parallel zur Halbkugel der ersten Übertragungsfläche in der in Fig. 1 dargestellten Ebene ist. An dem Bereich, an dem die Tangente an den Generierkreis der torusförmigen Fläche 18 parallel zur Achse x1 ist, ist die zweite Übertragungsfläche 18 vorzugsweise mit der Welle 16 verbunden, wobei die Verbindung jedoch auch über einen sich axial weiter erstreckenden Bereich als in Fig. 1 dargestellt, vorgenommen sein kann.

Als Übertragungsfläche 18 dient dabei die der Welle 16 abgewandte Fläche des Torus, d.h. die der konvex gewölbten Fläche 14 zugewandte konkave Toroidalfläche 18. Wesentlich dabei ist, dass in der in Fig. 1 dargestellten Schnittebene, d.h. der die Drehachsen x, x1 enthaltenden Ebene, zumindest in einem Teilbereich der zwischen den Übertragungsflächen 14, 18 gebildete Spaltkonstante die Spaltbreite d und damit parallele Grenzflächen aufweist, d.h. dass in der Schnittebene die Übertragungsfläche 18 und die Übertragungsfläche 14 zumindest entlang einer Linie zueinander parallel sind. Die Schnittebene entspricht derjenigen Ebene, in der die Kraft- und Momentübertragung stattfindet. Das ringförmige Übertragungselement erstreckt sich durch den Bereich zwischen der konkaven und der konvexen Übertragungsfläche einschließlich des Spalts mit der Breite d.

Der Übertragungsring 20 ist als starres Element in Kreisringform ausgeführt und besitzt einen Mittelpunkt 03, der auf der Verlängerung der Radien der kugelförmigen ersten Übertragungsfläche 14 und der toroidalen zweiten Übertragungsfläche 18 liegt, wobei er bezüglich des gemeinsamen Mittelspunktes des die sphärische Fläche erzeugenden Kreises mit dem Radius r1 und des den Genierkreis der Toroidalfläche r2 um einen Abstand e versetzt ist.

Die Wandstärke des Ringes entspricht der Differenz d zwischen r1 und r2, so dass der Ring bei einer Ausrichtung in Radialrichtung in guter Anlage mit der ersten und der zweiten Übertragungsfläche sein kann.

Der Ring 20 ist mittels einer Verstelleinrichtung 22, die durch die Lagerung 24 am Gehäuse (nicht dargestellt) gelagert ist, um die z-Achse (Achse senkrecht zur Zeichenebene in Fig. 1 und zur durch die Achsen x1, x aufgespannten Ebene durch den Mittelpunk 0 des Generierkreises der Toroidalfläche bzw. der sphärischen Fläche) verschwenkbar und somit ist sein Anlagepunkt an die Übertragungsflächen 14, 18 innerhalb des Spaltes, der zwischen der ersten Übertragungsfläche 14 und der zweiten Übertragungsfläche 18 gebildet wird, über einen Verstellbereich verschiebbar. Der Verstellbereich des Übertragungsrings ergibt sich als Schwenkbereich des Rings um die Achse z, d.h. um einen Winkelbereich von 0 < α ≤ 90° bezüglich der x Achse. In Fig. 1 ist mit durchgezogenen Linien eine Position dargestellt, in welcher der Ring 20 um den Winkel α ≈ 45° aus der x-Achse (Drehachse des ersten Übertragungselements) ausgelenkt ist. Mit gestrichelten Linien sind zwei weitere Winkelpositionen (α ≈ 10°, α ≈ 70°) dargestellt.

Der Ring 20, der das Drehmoment von der Eingangswelle x auf die Ausgangswelle x1 überträgt, liegt während der Übertragung an der Übertragungsfläche 14 und der Übertragungsfläche 18 an. In Abhängigkeit von der Winkelposition des Ringes (Auslenkung des Ringes um die x-Achse, Winkel α) wird ein Übersetzungsverhältnis zwischen der Drehzahl der Eingangswelle x und der Ausgangswelle x1 eingestellt. Das Übersetzungsverhältnis ergibt sich als Funktion der kinematischen Radien n1 und n2, welche jeweils als senkrechter Abstand des Anlagepunktes des Übertragungsrings 20 an der ersten Übertragungsfläche 14 zur Achse x (n1) bzw. als senkrechter Abstand des Anlagepunktes des Übertragungsrings 20 an der zweiten Übertragungsfläche 18 zur Achse x1 (n2) bestimmt werden.

Zur Verstellung des Ringes muss der Ring 20 um die z-Achse gedreht werden. Das dazu erforderliche Moment zur Drehung um die z-Achse kann beispielsweise mittels eines Elektromotors von außen erzeugt werden. Insbesondere wird der Ring 20, wenn eine Verstellung erforderlich ist, mittels der Verstellvorrichtung 22 zunächst aus seiner Lage senkrecht zur Tangente an die Übertragungsflächen 14, 18 im Anlagepunkt gekippt. Der Ring läuft durch die Rotation der Übertragungsflächen daraufhin von selbst mit, bis er die von der Getriebesteuerung vorgesehene neue Position erreicht hat und richtet sich dort wieder in die Position senkrecht zur Tangente an die Übertragungsflächen 14, 18 im neuen Anlagepunkt aus. Im letztgenannten Fall wird für Verstellung das Moment des Antriebsmotors verwendet.

Das Kippen des Ringes 20 aus dieser Position wird durch die Verstelleinrichtung 22 erreicht, die in Fig. 2 dargestellt ist. Abhängig von der Bewegungsrichtung des Gaspedals wird Öl unter Druck in die Räume A oder B der Verstelleinrichtung geleitet. Dadurch dreht sich das Zylinderelement 26 um einen Bolzen 28, der fest mit einer Welle 30, die ihre Drehachse in z-Richtung aufweist, verbunden ist. Dadurch dreht das Gestell 22 den Ring 20 um die in Radialrichtung des Ringes durch den Anlagepunkt an die Übertragungsflächen verlaufende Achse e3 und kippt den Ring somit. Der Ring 20 fängt damit an, um die z-Achse zu rotieren, bis das Gaspedal nicht mehr bewegt wird. Je nach Position des Rings variiert somit die Übersetzung, abhängig davon, wie schnell und wie weit das Gaspedal betätigt wird.

Der Ring 20 liegt mit seiner Außenumfangsfläche an der konkaven Übertragungsfläche 18 und mit seiner Innenumfangsfläche an der konvexen Übertragungsfläche 14 an. Um eine gute Anpressung beider Übertragungsflächen 14, 18 an den Ring 20 zu gewährleisten, ist vorzugsweise die Welle 16 in Axialrichtung verschiebbar gelagert und in Anpressrichtung vorbelastet, so dass stets eine gute Anpressung gewährleistet wird. Alternativ könnte auch die Welle 12 in Axialrichtung verschiebbar gelagert sein. Die Anpressrichtung ist stets so, dass der Abstand zwischen den Übertragungsflächen verringert wird.

Die Bewegung der verschiebbaren Welle 16 in Axialrichtung kann durch Öl unter Druck zwischen den Scheiben, welche die Übertragungsflächen 14, 18 bilden, und deren Lagerung erzeugt werden. Beispielsweise kann bei der in Fig. 1 gezeigten Ausführungsform Öl in die Kammer 32 zu- bzw. abgeführt werden, die von der der Übertragungsfläche 18 abgewandten Seite der Scheibe, der Welle 16 und der Lagerung 34 für die Welle 16 begrenzt wird. Der Druck in der Kammer 32 kann zum Beispiel durch einen Momentenfühler mit Kugeln auf geneigten Laufbahnen in Abhängigkeit vom Widerstandsmoment geregelt werden. Somit ist es möglich, den Variator in jeder Betriebssituation mit der passenden Pressung zu belasten.

Statt der sphärisch gekrümmten ersten Übertragungsfläche 14 und der Toroidalfläche 18 können auch Übertragungsflächen gewählt werden, welche als Generierende nicht kreisförmige, sondern beispielsweise ovale oder ellipsenförmige Grundflächen besitzen, solange sichergestellt ist, dass die Wandungen der konvexen Übertragungsfläche und der konkaven Übertragungsfläche zumindest in der Ebene, welche durch die Achsen x, x1 aufgespannt wird, parallel verlaufen, so dass ein Spalt d erzeugt wird, in dem das Übertragungselement, das als starrer Übertragungsring 20 ausgeführt ist, verstellbar gelagert ist und an die Übertragungsflächen angepresst werden kann. Allerdings vereinfacht die Paarung aus Toroidalfläche und sphärischer Fläche die Steuerung zur Einstellung des Übersetzungsverhältnisses, da sich die Flächenkrümmungen und somit die Variation der kinematischen Radien in Abhängigkeit von der Position des Übertragungsrings gut abbilden lassen. Außerdem kann dabei in jeder Position entlang der sphärischen Fläche und der Toroidalfläche die Anpressung an den Ring erzielt werden, indem der Ring lediglich um eine Achse senkrecht zur Zeichenebene in Fig. 1 gedreht wird.

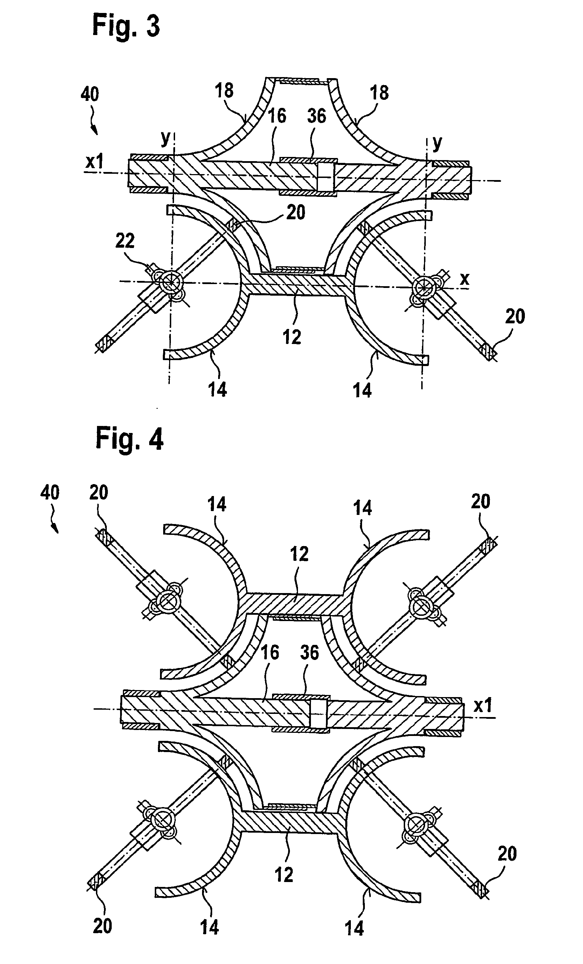

In Fig. 3 und 4 sind Anordnungen dargestellt, bei denen mehrere Variatoren 10 gemäß Fig. 1 zu einer Variatoranordnung 40 zusammengefügt sind. Insbesondere sitzen die konvexen Übertragungsflächen 14 bei der in Fig. 3 dargestellten Ausführungsform auf einer gemeinsamen Eingangswelle 12 und sind spiegelbildlich zueinander positioniert, wobei die Symmetrieebene senkrecht auf den Achsen x, x1 steht.

Die konkaven Übertragungsflächen sind ebenfalls spiegelbildlich bezüglich dieser Ebene zueinander angeordnet, wobei die Drehachse x1 wiederum parallel zur Achse x ist und beide zweiten Übertragungsflächen 18 eine gemeinsame Drehachse x1 aufweisen. Allerdings sind die Übertragungsflächen 18 zum Gewährleisten einer ausreichenden Anpressung an die jeweiligen konvexen Übertragungsflächen 14 bezüglich einander in Axialrichtung verschiebbar. Dazu ist die Ausgangswelle 16 mit einem Kupplungselement 36 versehen, welches eine axiale Verschiebung zulässt, jedoch Drehkräfte übertragen kann. Für jedes Paar aus konvexer und konkaver Übertragungsfläche 14, 18 ist ein Ringelement 20 vorgesehen, dem ein Verstellmechanismus 22 zugeordnet ist.

Durch diese Anordnung können höhere Momente übertragen werden.

Eine alternative Anordnung, bei der ebenfalls mehrere Variatoren 10 parallel montiert sind, ist in Fig. 4 dargestellt, wobei die Anordnung im Wesentlichen der Anordnung aus Fig. 3 entspricht und zwei weitere Variatoren 10 symmetrisch bezüglich der x1-Achse, d.h. der Drehachse der Ausgangswelle angeordnet sind.

### Bezugszeichenliste

- 10: Variator
- 12: erste Welle
- 14: erste Übertragungsfläche
- 16: zweite Welle
- 18: zweite Übertragungsfläche
- 20: Ring
- 22: Verstelleinrichtung
- 24: Lagerung des Rings
- 26: Zylinderelement
- 28: Bolzen
- 30: Welle
- 32: Kammer
- 34: Lagerung
- 36: Kupplungselement
- 40: Variatorenanordnung
- r1: Radius
- r2: Radius
- x: Drehachse
- x1: Drehachse
- A: Räume
- B: Räume
- d: Abstand (Spalt)
- e: Abstand
- e3: Achse
- n1: Radius
- n2: Radius
- a: Winkel
- 0: Mittelpunkt
- z: Achse

## Patentansprüche

1. Variator (10) für ein stufenloses Getriebe, enthaltend
ein um eine erste Drehachse (x) drehbares erstes Übertragungselement mit einer konvex gekrümmten, um die erste Drehachse rotationssymmetrischen Übertragungsfläche (14),
ein zweites, um eine zweite Drehachse (x1) drehbares Übertragungselement mit einer konkav gekrümmten, um die zweite Drehachse (x1) rotationssymmetrischen Übertragungsfläche (18), und
einen starren, in seiner Relativposition zu den Übertragungsflächen (14, 18) innerhalb eines Verstellbereichs verstellbaren und an beide Übertragungsflächen (14, 18) anpressbaren Übertragungsring (20), der ein Drehmoment zwischen der ersten und der zweiten Übertragungsfläche überträgt, wobei Schnittlinien der Übertragungsflächen mit einer durch die Drehachsen (x, x1) aufgespannten Ebene zumindest im Verstellbereich des Übertragungsrings (20) parallel verlaufen, **dadurch gekennzeichnet, dass** mindestens das erste oder das zweite Übertragungselement in Axialrichtung der Drehachse (x, x1) verschiebbar ist.

2. Variator (10) nach Anspruch 1, **dadurch gekennzeichnet, dass** die konvex gekrümmte Übertragungsfläche (14) eine sphärisch gekrümmte Fläche ist.

3. Variator (10) nach einem der vorhergehenden Ansprüche, **dadurch gekennzeichnet, dass** die konkav gekrümmte Übertragungsfläche (18) eine Toroidalfläche ist.

4. Variator (10) nach Anspruch 2 oder 3, **dadurch gekennzeichnet, dass** die sphärische Fläche (14) und der Generierkreis der Toroidalfläche (18) gleiche Mittelpunkte (0) aufweisen und der Radius r2 der Toroidalfläche r2 = d + r1 ist, wobei d der kleinste Abstand zwischen der Toroidalfläche und der sphärischen Fläche und r1 der Radius der sphärischen Fläche ist.

5. Variator (10) nach Anspruch 4, **dadurch gekennzeichnet, dass** der Übertragungsring (20) einen Mittelpunkt (03) aufweist, der auf der Verlängerung der Radien (r1, r2) der sphärischen Fläche (14) und des Generierkreises der Toroidalfläche (18) liegt.

6. Variator (10) nach einem der vorhergehenden Ansprüche, weiter enthaltend eine Verstelleinrichtung (22) zur Verstellung des Übertragungsrings, welche den Übertragungsring (20) bei einem Verstellvorgang aus seiner zur Tangente am Anlagepunkt an die Übertragungsflächen senkrechten Position auslenkt.

7. Variator nach einem der vorhergehenden Ansprüche, **dadurch gekennzeichnet, dass** ein Momentenfühler an der An- und/oder Abtriebseite vorgesehen ist, um die Variatorelemente mit der erforderlichen Pressung zu belasten.

8. Variator (10) nach einem der vorhergehenden Ansprüche, **dadurch gekennzeichnet, dass** die konvexe Übertragungsfläche (14) am Eingangsübertragungselement und die konkave Übertragungsfläche am Ausgangsübertragungselement vorgesehen ist.

9. Variator nach einem der Ansprüche 1 bis 7, **dadurch gekennzeichnet, dass** die konvexe Übertragungsfläche (14) am Ausgangsübertragungselement und die konkave Übertragungsfläche am Eingangsübertragungselement vorgesehen ist.

10. Variator (10) nach einem der vorhergehenden Ansprüche, **dadurch gekennzeichnet, dass** die Drehachsen (x, x1) des ersten und des zweiten Übertragungselements zueinander parallel sind.

11. Variatoranordnung (40), enthaltend mehrere Variatoren (10) nach einem der vorhergehenden Ansprüche.

12. Variatoranordnung (40) nach Anspruch 11, **dadurch gekennzeichnet, dass** zwei achsensymmetrisch zueinander angeordnete Variatoren (10) vorgesehen sind, wobei die Symmetrieachse senkrecht zu den parallelen Drehachsen der Übertragungselemente ist.

13. Variatoranordnung (40) nach Anspruch 12, **dadurch gekennzeichnet, dass** vier Variatoren (10) vorgesehen sind, wobei Übertragungselemente mit konkaven Übertragungsflächen eine gemeinsame Drehachse aufweisen und die Variatoren achsensymmetrisch bezüglich einer auf den parallelen Drehachsen der Übertragungselemente senkrecht stehenden Symmetrieachse und achsensymmetrisch bezüglich der gemeinsamen Drehachse angeordnet sind.

14. Reibgetriebe und/oder CVT mit einem oder mehreren Variatoren in einer der Anordnungen nach einem der vorhergehenden Ansprüche.

15. Kraftfahrzeug mit einem Getriebe nach einem der vorhergehenden Ansprüche.

## Claims

1. Variator (10) for a continuously variable transmission, comprising
a first transmission element, which is rotatable about a first rotational axis (x), with a convexly curved transmission surface (14) which is rotationally symmetrical about the first rotational axis,
a second transmission element, which is rotatable about a second rotational axis (x1), with a concavely curved transmission surface (18) which is rotationally symmetrical about the second rotational axis (x1),
a rigid transmission ring (20) which is adjustable within an adjustment range in terms of its relative position to the transmission surfaces (14, 18) and which can be pressed against the two transmission surfaces (14, 18), which transmission ring (20) transmits a torque between the first and second transmission surfaces, with lines of intersection of the transmission surfaces with a plane spanned by the rotation axes (x, x1) running parallel at least in the adjustment range of the transmission ring (20), **characterized in that** at least the first or the second transmission element is movable in the axial direction of the rotational axis (x, x1).

2. Variator (10) according to Claim 1, **characterized in that** the convexly curved transmission surface (14) is a spherically curved surface.

3. Variator (10) according to one of the preceding claims, **characterized in that** the concavely curved transmission surface (18) is a toroidal surface.

4. Variator (10) according to Claim 2 or 3, **characterized in that** the spherical surface (14) and the generating circle of the toroidal surface (18) have identical central points (0) and the radius r2 of the toroidal surface r2 = d + r1, where d is the smallest spacing between the toroidal surface and the spherical surface and r1 is the radius of the spherical surface.

5. Variator (10) according to Claim 4, **characterized in that** the transmission ring (20) has a central point (03) which lies on the elongation of the radii (r1, r2) of the spherical surface (14) and of the generating circle of the toroidal surface (18).

6. Variator (10) according to one of the preceding claims, also comprising an adjusting device (22) for adjusting the transmission ring, which adjusting device (22), during an adjusting process, deflects the transmission ring (20) out of its position perpendicular to the tangent at the point of contact against the transmission surfaces.

7. Variator according to one of the preceding claims, **characterized in that** a torque sensor is provided at the drive input and/or drive output side in order to load the variator elements with the required pressure.

8. Variator (10) according to one of the preceding claims, **characterized in that** the convex transmission surface (14) is provided on the input transmission element and the concave transmission surface is provided on the output transmission element.

9. Variator according to one of Claims 1 to 7, **characterized in that** the convex transmission surface (14) is provided on the output transmission element and the concave transmission surface is provided on the input transmission element.

10. Variator (10) according to one of the preceding claims, **characterized in that** the rotational axes (x, x1) of the first and second transmission elements are parallel to one another.

11. Variator arrangement (40), comprising a plurality of variators (10) according to one of the preceding claims.

12. Variator arrangement (40) according to Claim 11, **characterized in that** two variators (10) which are arranged axially symmetrically with respect to one another are provided, with the axis of symmetry being perpendicular to the parallel rotational axes of the transmission elements.

13. Variator arrangement (40) according to Claim 12, **characterized in that** four variators (10) are provided, wherein transmission elements with concave transmission surfaces have a common rotational axis and the variators are arranged axially symmetrically with respect to an axis of symmetry which is perpendicular to the parallel rotational axes of the transmission elements, and axially symmetrically with respect to the common rotational axis.

14. Friction drive and/or CVT having one or more variators in one of the arrangements according to one of the preceding claims.

15. Motor vehicle having a transmission according to one of the preceding claims.

## Revendications

1. Variateur (10) pour une transmission continue, comprenant un premier élément de transmission qui peut tourner autour d'un premier axe de rotation (x) et qui présente une surface de transmission (14) à courbure convexe et à symétrie rotationnelle autour du premier axe de rotation,
un deuxième élément de transmission qui peut tourner autour d'un deuxième axe de rotation (x1) et qui présente une surface de transmission (18) à courbure concave et à symétrie rotationnelle autour du deuxième axe de rotation, et
une bague de transmission (20) rigide, dont la position relative par rapport aux surfaces de transmission (14, 18) peut être modifiée au sein d'une plage de positionnement et qui peut être mise en appui sur les deux surfaces de transmission (14, 18), laquelle transmet un couple entre la première et la deuxième surface de transmission, les lignes d'intersection des surfaces de transmission avec un plan qui s'étire à travers les axes de rotation (x, x1) étant parallèles au moins dans la plage de positionnement de la bague de transmission (20), **caractérisé en ce qu'**au moins le premier ou le deuxième élément de transmission peut coulisser dans le sens axial de l'axe de rotation (x, x1).

2. Variateur (10) selon la revendication 1, **caractérisé en ce que** la surface de transmission (14) à courbure convexe est une surface à courbure sphérique.

3. Variateur (10) selon l'une des revendications précédentes, **caractérisé en ce que** la surface de transmission (18) à courbure concave est une surface toroïdale.

4. Variateur (10) selon la revendication 2 ou 3, **caractérisé en ce que** la surface sphérique (14) et le cercle générique de la surface toroïdale (18) présentent le même point central (0) et le rayon r2 de la surface toroïdale est égal à r2 = d + r1, d désignant le plus petit écart entre la surface toroïdale et la surface sphérique et r1 le rayon de la surface sphérique.

5. Variateur (10) selon la revendication 4, **caractérisé en ce que** la bague de transmission (20) présente un point central (03) qui se trouve sur la prolongation des rayons (r1, r2) de la surface sphérique (14) et du cercle générique de la surface toroïdale (18).

6. Variateur (10) selon l'une des revendications précédentes, comprenant en plus un dispositif de positionnement (22) pour positionner la bague de transmission et qui, lors d'une opération de positionnement, dévie la bague de transmission (20) de sa position tangente au point d'appui vers une position perpendiculaire aux surfaces de transmission.

7. Variateur selon l'une des revendications précédentes, **caractérisé en ce qu'**il est prévu un capteur de couple sur le côté moteur et/ou entraîné afin d'appliquer la pression nécessaire aux éléments du variateur.

8. Variateur (10) selon l'une des revendications précédentes, **caractérisé en ce que** la surface de transmission convexe (14) est prévue sur l'élément de transmission d'entrée et la surface de transmission concave sur l'élément de transmission de sortie.

9. Variateur selon l'une des revendications 1 à 7, **caractérisé en ce que** la surface de transmission convexe (14) est prévue sur l'élément de transmission de sortie et la surface de transmission concave sur l'élément de transmission d'entrée.

10. Variateur (10) selon l'une des revendications précédentes, **caractérisé en ce que** les axes de rotation (x, x1) du premier et du deuxième élément de transmission sont parallèles l'un à l'autre.

11. Arrangement de variateurs (40) contenant plusieurs variateurs (10) selon l'une des revendications précédentes.

12. Arrangement de variateurs (40) selon la revendication 11, **caractérisé en ce que** sont prévus deux variateurs (10) disposés en symétrie axiale l'un par rapport à l'autre, l'axe de symétrie étant perpendiculaire aux axes de rotation parallèles des éléments de transmission.

13. Arrangement de variateurs (40) selon la revendication 12, **caractérisé en ce que** sont prévus quatre variateurs (10), les éléments de transmission munis de surfaces de transmission concaves présentant un axe de rotation commun et les variateurs étant disposés en symétrie axiale par rapport à un axe de symétrie perpendiculaire aux axes de rotation parallèles des éléments de transmission et en symétrie axiale par rapport à l'axe de rotation commun.

14. Mécanisme à vitesse variable et/ou transmission à variation continue comprenant un ou plusieurs variateurs dans l'un des arrangements selon l'une des revendications précédentes.

15. Véhicule automobile équipé d'une boîte de vitesses selon l'une des revendications précédentes.
